# EUROPEAN PATENT SPECIFICATION

(11) **EP 3 996 558 B1**
(45) Date of publication and mention of the grant of the patent: **30.08.2023**
(21) Application number: 20754021.2
(22) Date of filing: 10.07.2020
(51) Int. Cl.: A47J 31/00, A47J 31/52, A47J 31/36

(54) **ESPRESSO COFFEE MACHINE**
ESPRESSOMASCHINE
MACHINE À CAFÉ EXPRESSO

(30) Priority: 11.07.2019 IT 201900011538
(43) Date of publication of application: 18.05.2022
(73) Proprietor: EVOCA S.p.A., 24030 Valbrembo (BG) (IT)
(72) Inventor: LIBERALI, Marco, 20121 Milano (IT)
(74) Representative: Giannini, Manuela
(86) International application number: PCT/IB2020/056512
(87) International publication number: WO 2021/005570

(56) References cited:
- WO-A1-2015/124592
- US-A1- 2015 110 935

## Description

### Cross-Reference To Related Applications

This patent application claims priority to Italian patent application no. 102019000011538 filed on 11/07/2019.

### Technical Field of the Invention

The present invention relates in general to beverage preparation machines, in particular machine capable of brewing hot beverages from a brewing substance with pressurised hot water, such as coffee-based beverages, for example espresso coffee, instant coffee, long coffee or "fresh-brew", etc., tea-based beverages, or barley- or other cereal-based beverages.

The present invention finds advantageous, although not exclusive, application in automatic or semi-automatic professional espresso coffee machines, to which the following description will refer for descriptive convenience without thereby losing its generality.

### State of the Art

As is known, coffee is receiving great interest by the public and the hospitality industry, also known as Ho.Re.Ca., acronym for Hotel, Restaurant, Café. The interest in this beverage has increased transversally among consumers, the signs dedicated to the flavour and the experience of this beverage have multiplied, and this despite the crises that have occurred. In fact, the consumption in the last 40 years has passed from 80 to 160 million of 60 kg coffee bags and also the Millennials have contributed towards this increase, both in the traditional markets, and in the less mature ones where the coffee sector has been developed from scratch in regions such as China or the Far East.

Today the accent of the sector is on "premiumisation", i.e. the tendency of consumers to purchase high-priced quality products, and on "specialties", while the espresso coffee is worth 10% of the business of the big chains.

In the field of professional espresso coffee machines there are different technologies for controlling the coffee brewing process so as to ensure a good quality of the product dispensed.

Some of these technologies are described, for example, in EP 1 867 262 B1, EP 2 313 182 B1, EP 2 313 183 B1, EP 2 575 561 B1, EP 2 642 906 B1, EP 2 991 530 B1, EP 3 364 826 A1, WO 2015/124592 A1 and US 2015/110935 A1.

In particular, WO 2015/124592 A1 discloses a coffee machine comprising at least a hydraulic brewing circuit comprising at least a water supply pump; at least a water boiler hydraulically cascade-connected to the water supply pump; at least a brewing assembly hydraulically cascade-connected to the water boiler and through which a hot water flow rate is caused to flow to carry out a brewing cycle; means for regulating the water flow rate; means for measuring the water flow rate; and a feedback controller connected to the regulation means and the measurement means and configured to real-time the current value of the water flow rate measured by the measurement means with a corresponding reference value and to control the regulation means so as to eliminate any deviation of the current value of the water flow rate with respect to the corresponding reference value of the water flow rate.

US 2015/110935 A1 is directed toward regulating flow rate in an espresso coffee machine, during a multi-phase brewing process which includes a pre-brew and an extraction phase. During the pre-brew phase, coffee grounds are slowly pre-wetted and/or out-gassed with a first volume of water delivered at a first flow rate. During the extraction phase, a second volume of water is delivered, at a second flow rate, to extract espresso, where the second volume is delivered at a generally greater pressure than the first volume. The second flow rate is greater than the first flow rate. The flow rates, volumes, and pressures are regulated by the espresso machine, which includes a flow rate regulation assembly that comprises first and second flow paths and first and second valves. Baristas may vary the flow rate, volume, and pressure of water throughout the brewing process by opening, closing, or otherwise adjusting at least one of the valves.

### Object and Summary of the Invention

The Applicant has experienced that the professional espresso coffee machines described in the above-listed prior art references, although satisfactory in many respects, still have wide margins for improvement as to the control of the coffee brewing process, which is a fundamental factor for the quality of the beverages dispensed.

Therefore, the object of the present invention is to provide an improved professional espresso coffee machine compared to the known ones as to the control of the coffee brewing process.

According to the present invention, a beverage preparation machine and an electronic control unit therefor are provided, as claimed in the appended claims.

### Brief Description of the Drawings

Figure 1 is a perspective view of a professional espresso coffee machine.
Figure 2 is a schematic view of a water supply circuit and an electronic control system of the professional espresso coffee machine.
Figure 3 shows a profile of the water flow rate and a consequent profile of the water pressure in a water supply branch of the professional espresso coffee machine.

### Detailed Description of Preferred Embodiments of the Invention

The present invention will now be described in detail with reference to the accompanying figures to enable a person skilled in the art to realise it and use it.

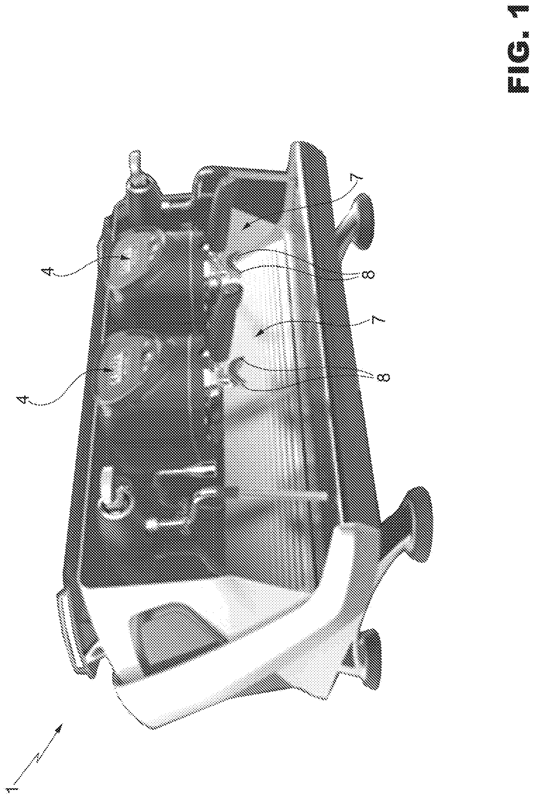

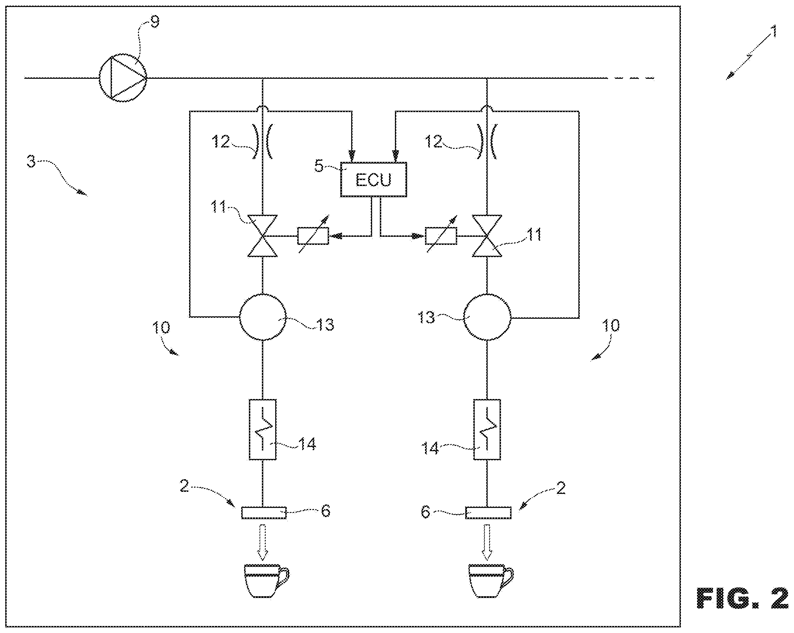

Figure 1 shows a professional espresso coffee machine, while Figure 2 shows a block diagram of the professional espresso coffee machine.

As is shown in Figures 1 and 2, the professional espresso coffee machine, referenced as a whole with reference numeral **1,** comprises:
- one or more brewing assemblies **2** configured to carry out the same brewing process to brew a brewing substance, in the example considered in the form of coffee powder, with a brewing liquid, in example considered in the form of pressurised hot water, so as to produce one and the same coffee-based beverage, in the example considered in the form of an espresso coffee, in either identical or different amounts, for example strong or long espresso coffees, starting from coffee powder of either one and the same or different type in terms of coffee species (arabica, robusta), coffee blend, coffee granulometry, process to which the coffee was subject, for example decaffeinated, flavoured, etc.;
- a water supply circuit **3** to supply to the brewing assemblies **2** pressurised hot water necessary for preparing espresso coffee;
- one or more user interfaces **4,** one for each brewing assembly **2,** to allow beverages to be selectable by a user; and
- an electronic control unit **5** to control operation of the professional espresso coffee machine **1** in response to selections of beverages by a user.

Each brewing assembly **2** comprises:
- a pressurised hot water dispenser **6** in the form of a shower head or a sprinkler, and
- a filter-holder **7** with one or more espresso coffee dispensing nozzles **8** and adapted to contain, in use, coffee powder to be brewed with pressurised hot water to prepare espresso coffee and to be manually coupleable, in use, to the pressurised hot water dispenser **6** to receive pressurised hot water therefrom.

The water supply circuit **3** comprises:
- a water pump **9,** conveniently an electric variable-speed pump, and in the nonlimiting example considered common to all the brewing assemblies **2,** which may be supplied with cold water from a cold water source (not shown), which may be alternatively the public water mains or a water tank which may be housed either inside or outside, and fluidly connected to, the professional espresso coffee machine **1** and fluidly connected to the public water mains to receive cold water therefrom, and which is operable to supply pressurised cold water under pressure, and
- a water supply branch **10** for each brewing assembly **2,** arranged downstream of the water pump **9** and fluidly connected between the delivery of the water pump **9** and the respective brewing assembly **2** to supply pressurised hot water to the respective brewing assembly **2.**

Optionally, the water supply circuit **3** may comprise a water pre-heater (not shown), conveniently a continuous-flow pre-heater, arranged downstream of the water pump **9,** between the latter and the water supply branches **10,** to pre-heat the water supplied to the latter.

Each water supply branch **10** comprises, in sequence, in the direction of the water flow from the water pump **9** to the respective brewing assembly **2:**
- a water flow rate regulation solenoid valve **11,** and, optionally, a giggleur **12** arranged upstream of the water flow rate regulation solenoid valve **11,** to regulate the water flow rate in the water supply branch **10**; and
- a water flow meter **13** to measure, and output an electrical output indicative of, the amount of water, measured in volume, supplied to the water supply branch **10;** and
- a water heater **14** to (further) heat the water in the water supply branch **10.**

In a preferred embodiment, the water flow rate regulation solenoid valves **11** are motorised solenoid valves with electric stepper motors to allow the water flow rate to be discretely regulated.

In a different embodiment, the water flow rate regulation solenoid valves **11** are motorised solenoid valves with electric linear motors to allow the water flow rate to be substantially continuously regulated.

The electronic control unit **5** is electrically connected to the water meters **13** to receive therefrom the electrical outputs indicative of the water flow rates in the corresponding water supply branches **10,** to the user interfaces **4** to receive therefrom the electrical outputs indicative of the beverage selections, and to the water pump **9,** to the water flow rate regulation solenoid valves **11,** to the water heaters **14,** and to the water pre-heater, when provided, to output electrical commands thereto.

The electronic control unit **5** is configured to:
- store one or different target water flow rate profiles **FRP,** each of which is associated with a respective coffee-based beverage preparable by a brewing assembly **2** and is indicative of the time development of the water flow rate **Q** that is intended to be supplied to the corresponding water supply branch **10** during a coffee-based beverage preparation cycle; and
- closed-loop control the water flow rate regulation solenoid valves **11** based on the amounts of water measured by the water meters **13** and on the target water flow rate profiles **FRP** associated with the selected beverages to be dispensed.

In a preferred embodiment, the target water flow rate profiles **FRP** are designed to cause the water flow rate regulation solenoid valves **11** to be controlled so that in the corresponding brewing assemblies **2** at least a coffee powder pre-infusion step with a pre-infusion duration is carried out during which the current water flow rate supplied to the brewing assembly **2** follows a pre-infusion water flow rate profile, followed by at least a coffee powder infusion step with an infusion duration during which the current water flow rate supplied to the brewing assembly **2** follows an infusion water flow rate profile, whereby the switching from the pre-infusion step to the infusion step occurs on a time basis.

In this way, switching from the pre-infusion step to the infusion step, or, more in general, from a preceding (pre-)infusion step to a following (pre-)infusion step is programmed so as to occur on a time basis, at the end of the duration of the preceding (pre-)infusion step, which duration may be properly diversified, if necessary, among the various coffee-based beverages preparable by the professional espresso coffee machine **1.**

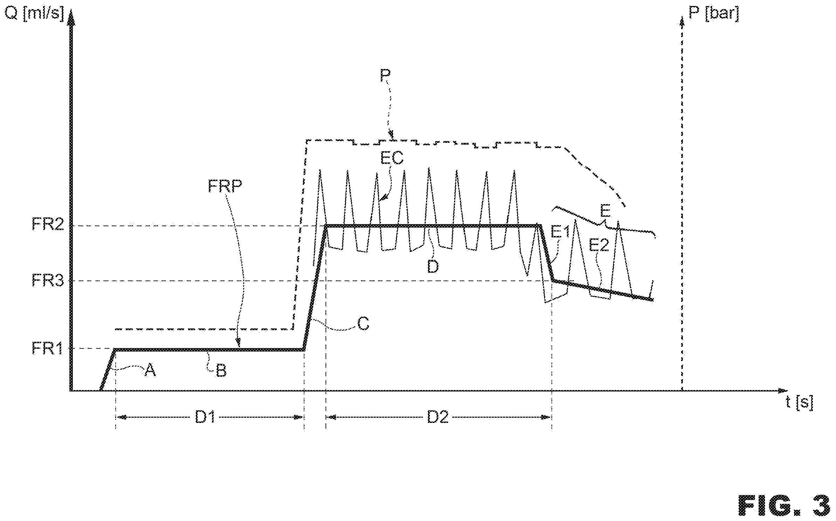

In a preferred embodiment, the stored target water flow rate profiles **FRP** have time developments of the type shown in Figure 3 with a bold continuous line.

As shown in Figure 3, a target water flow rate profile **FRP** has preferably, but not necessarily, a time-variable development over time according to a broken line, formed by a plurality of substantially rectilinear stretches comprising:
- a first rapid rising stretch **A,** generally of negligible duration compared to that of the following stretches, during which the current water flow rate increases rapidly from a substantially null water flow rate to a pre-infusion water flow rate **FR1**,
- a pre-infusion stretch **B**, during which the current water flow rate is substantially constant at the pre-infusion water flow rate **FR1** for a pre-infusion duration **D1**, so as to carry out a coffee powder pre-infusion step,
- a second rapid rising stretch **C,** during which the current water flow rate increases rapidly from the pre-infusion water flow rate **FR1** to an infusion water flow-rate **FR2,** higher than the pre-infusion water flow rate **FR1**,
- an infusion stretch **D,** during which the current water flow rate is substantially constant over time to an infusion water flow rate **FR2** for an infusion duration **D2**, which can be equal to or different from, preferably higher than, the pre-infusion duration **D1**, so as to carry out a ground coffee infusion step, and
- one or more falling stretches **E,** during which the current water flow rate decreases from the infusion water flow rate **FR2** to a substantially null water flow rate.

In the embodiment shown in Figure 3, the current water flow rate decreases from the infusion water flow rate **FR2** to a null water flow rate suitably according to a straight line or a broken line comprising:
- a rapid falling stretch **E1**, during which the current water flow rate decreases rapidly from the infusion water flow rate **FR2** to an intermediate water flow rate **FR3** between the infusion water flow rate **FR2** and the pre-infusion water flow rate **FR1,** with an inclination substantially equal, but of opposite sign, to that of the second rapid rising stretch C, and
- a slow falling stretch **E2,** during which the current water flow rate decreases slowly from the intermediate water flow rate **FR3** to a substantially null water flow rate, with an inclination lower than that of the rapid falling stretch **E1**.

In a different embodiment not shown, the slow falling stretch **E2** may be omitted and, hence, only the rapid falling stretch **E1** may be provided.

In a further embodiment not shown, the target water flow rate profiles **FRP** may comprise additional substantially rectilinear stretches to those described above and shown in Figure 3.

For example, the target water flow rate profiles **FRP** may comprise different pre-infusions stretches **B** with different pre-infusion water flow rates **FR1** and different pre-infusion durations **D1,** so as to carry out different coffee powder pre-infusion steps, different infusions stretches **D** with different infusion water flow rates **FR2** and different infusion durations **D2,** so as to carry out different coffee powder infusion steps, different rapid rising stretches **A**, **C** with different rapid rising inclinations, different rapid and slow falling stretches **E1, E2** with different rapid and slow falling inclinations.

In a further embodiment not shown, the target water flow rate profiles **FRP** may have time-variable developments over time so as to define mixed lines, i.e., lines formed by substantially rectilinear stretches and curved stretches, or curved lines.

In a further embodiment not shown, the pre-infusion water flow rate **FR1** and/or the infusion water flow rate **FR2** may have time developments that are not constant during the pre-fusion and infusion durations **D1, D2,** but that vary over time according to pre-fusion and infusion water flow rate profiles.

Based on what described above and shown in Figure 3, it may be appreciated that the target water flow rate profiles **FRP** and any variants thereof is mainly characterised by the following main parameters or quantities:
- the number of pre-infusion and infusion steps,
- the pre-infusion and infusion water flow rate profiles in the different pre-infusion and infusion steps, and
- the pre-infusion and infusion durations.

The target water flow rate profiles **FRP** may then also be secondarily characterised by secondary parameters or quantities, such as the developments of the transitions between the pre-infusion and infusion flow rates.

Therefore, each of the target water flow rate profiles **FRP** that are associated with the different coffee-based beverages preparable by the professional espresso coffee machine **1** may be conveniently stored in the electronic control unit **5** in the form of a table containing, for the different coffee-based beverages preparable by the professional espresso coffee machine **1,** the main parameters and any secondary parameters which characterise the target water flow rate profiles **FRP.**

Figure 3 also shows, with a dotted line, the time development of the water pressure **P** in a water supply branch **10** during an espresso coffee preparation cycle, which water pressure **P** results from the implementation of the target water flow rate profile **FRP** shown in Figure 3 and depends, in addition to on the target water flow rate profile **FRP,** also on other factors, the main one of which is represented by the characteristics of the coffee powder contained in the brewing assemblies **2,** in particular the coffee powder granulometry and compression level.

Lastly, Figure 3 also shows, with a thinner continuous line, the time development of an electrical command **EC** supplied by the electronic control unit **5** to a water flow rate regulation solenoid valve **11** during a beverage preparation cycle to result in the target water flow rate profile **FRP** shown in Figure 3.

The electronic control unit **5** is also programmed to control, in response to beverage selections by a user through the user interface **4,** operations of the water flow rate regulation solenoid valves **11** based on the target water flow rate profiles **FRP** associated with the selected beverages and selected among the stored one in response to the beverage selections, so as to cause the water flow rates in the corresponding water supply branches **10** to follow the selected target water flow rate profiles **FRP.**

The electronic control unit **5** is conveniently programmed to closed-loop control the water flow rate regulation solenoid valves **11** implementing, for each of which, a mainly PID regulator (Proportional-Integral-Derivative) or equivalent, which receives the amount of water measured by the corresponding water meter **13** and the target water flow rate profile **FRP** associated with the selected beverage and supplies the corresponding water flow rate regulation solenoid valve **11** with an electrical command based on the proportional, derivative and integral terms.

From an implementative standpoint, having regard to the fact that the water meters **13** that are usually used in beverage preparation machines where beverages are brewed from brewing substances with pressurised hot water under are typically of a turbine type, i.e., where water flows through a small hydraulic turbine the rotational speed of which is proportional to the water flow rate and is measured through one or more magnets that are inserted in the turbine and are caused to pass near a magnetic sensor that responsively outputs an electrical impulse for each turbine rotation, the electrical signals outputted by the water meters **13** are of an impulsive type and hence the closed-loop control of the water flow rates in a water supply branches **10** carried out by the electronic control unit **5** amounts to a closed-loop control (of the flow cross-sections) of the water flow rate regulation solenoid valves **11** based on the frequency of the impulses of the electrical signals outputted by the water meters **13.**

Based on what described above, the advantages that the present invention allows to achieve may be appreciated.

In particular, the present invention allows the water flow rates supplied to the brewing assemblies and, indirectly, the beverage brewing pressure to be profiled in a manner that is at the same time technologically simple, because it is based on a simple electronic control architecture and on a sensory system already present in the professional espresso coffee machines, and precise and reliable to implement, thus positively affecting the quality of the beverages dispensed by the professional espresso coffee machines provided with this technology.

## Claims

1. A beverage preparation machine (**1**) comprising:
- at least a brewing assembly (**2**) configured to brew a beverage from a brewing substance with a brewing liquid;
- a brewing liquid supply circuit (**3**) to supply a brewing liquid to the brewing assembly (**2**); and
- an electronic control unit (**5**) to control operation of the beverage preparation machine (**1**);
the brewing liquid supply circuit (**3**) comprises:
- a brewing liquid flow rate regulation solenoid valve (**11**) to regulate the flow rate of the brewing liquid supplied to the brewing assembly (**2**); and
- a brewing liquid flow meter (**13**) to measure, and output an electrical output indicative of, a quantity indicative of an amount of brewing liquid supplied to the brewing assembly (**2**);
the electronic control unit (**5**) is electrically connected to the brewing liquid flow meter (**13**) to receive the electrical output therefrom, and to the brewing liquid flow rate regulation solenoid valve (**11**) to provide an electrical command thereto;
the electronic control unit (**5**) is configured to:
- store brewing data representative of at least a target brewing liquid flow rate profile (**FRP**) indicative of a time development of a brewing liquid flow rate that is intended to be supplied to the brewing assembly (**2**) during a beverage preparation cycle; and
- closed-loop control the brewing liquid flow rate regulation solenoid valve (**11**) based on the electrical output of the brewing liquid flow meter (**13**) and on the target brewing liquid flow rate profile (**FRP**) to cause the current brewing liquid flow rate supplied to the brewing assembly (**2**) to follow the target brewing liquid flow rate profile (**FRP**);
**characterised in that** the target brewing liquid flow rate profile (**FRP**) is stored in the electronic control unit (**5**) as brewing data indicative of:
- number of brewing substance pre-infusion and infusion steps in a beverage preparation cycle,
- pre-infusion and infusion flow rate profiles (**R1**, **R2**) of the brewing liquid during the brewing substance pre-infusion and infusion steps, and
- pre-infusion and infusion durations (**D1**, **D2**) of the brewing substance pre-infusion and infusion steps;
and **in that** the target brewing liquid flow rate profile (**FRP**) is designed to cause the brewing liquid flow rate regulation solenoid valve (**11**) to be controlled so as to carry out at least a brewing substance pre-infusion step having a stored pre-infusion duration (**D1**) and during which the current brewing liquid flow rate supplied to the brewing assembly (**2**) follows a stored pre-infusion flow rate profile (**R1**), followed by at least a brewing substance infusion step having a stored infusion duration (**D2**) and during which the current brewing liquid flow rate supplied to the brewing assembly (**2**) follows a stored infusion flow rate profile (**R2**), whereby switching from the brewing substance pre-infusion step to the brewing substance infusion step occurs at the end of the stored duration (**D1**) of the preceding pre-infusion step.

2. The beverage preparation machine (**1**) of Claim **1**, wherein the target brewing liquid flow rate profile (**FRP**) has a time-variable development over time according to a broken line, formed by a plurality of substantially rectilinear stretches comprising:
- at least a rising stretch (**A**), during which the current brewing liquid flow rate supplied to the brewing assembly (**2**) increases from a substantially null flow rate to a stored pre-infusion flow rate (**R1**),
- at least a pre-infusion stretch (**B**), during which the current brewing liquid flow rate supplied to the brewing assembly (**2**) is substantially constant at the stored pre-infusion flow rate (**R1**) for a stored pre-infusion duration (**D1**),
- at least a further rising stretch (**C**), during which the current brewing liquid flow rate supplied to the brewing assembly (**2**) increases from the stored pre-infusion flow rate (**R1**) to a stored infusion flow rate (**R2**), higher than the stored pre-infusion flow rate (**R1**),
- at least an infusion stretch (**D**), during which the current brewing liquid flow rate supplied to the brewing assembly (**2**) is substantially constant over time at the stored infusion flow rate (**R2**) for a stored infusion duration (**D2**), and
- at least a falling stretch (**E**) during which the current brewing liquid flow rate supplied to the brewing assembly (**2**) decreases from the stored infusion flow rate (**R2**) to a substantially null flow rate.

3. The beverage preparation machine (**1**) of any one of the preceding claims, wherein the electronic control unit (**5**) is configured to store a plurality of target brewing liquid flow rate profiles (**FRP**) associated with corresponding beverages preparable by the beverage preparation machine (**1**).

4. The beverage preparation machine (**1**) of any one of the preceding claims, wherein the brewing liquid flow meter (**13**) is arranged downstream of the brewing liquid flow rate regulation solenoid valve (**11**).

5. The beverage preparation machine (**1**) of any one of the preceding claims, wherein the brewing liquid supply circuit (**3**) further comprises a brewing liquid heater (**14**) arranged downstream of the brewing liquid flow meter (**13**).

6. The beverage preparation machine (**1**) of any one of the preceding claims, wherein the brewing liquid supply circuit (**3**) further comprises a brewing liquid pump (**9**) to supply the brewing liquid along the brewing liquid supply circuit (3).

7. The beverage preparation machine (**1**) of any one of the preceding claims, wherein the brewing liquid flow rate regulation solenoid valve (**11**) is a motorised solenoid valve with an electric stepper motor operable to allow the brewing liquid flow rate supplied to the brewing assembly (**2**) to be discretely regulated.

8. The beverage preparation machine (**1**) of any one of the preceding claims, comprising a plurality of brewing assemblies (**2**);
the brewing liquid supply circuit (**3**) further comprises:
- a plurality of brewing liquid supply branches (**10**), one for each brewing assembly (**2**), to supply the brewing liquid to the brewing assemblies (**2**); and
- a brewing liquid pump (**9**), common to all the brewing assemblies (**2**), to supply the brewing liquid to the brewing liquid supply branches (**10**).

## Patentansprüche

1. Eine Getränkezubereitungsmaschine (1), die Folgendes aufweist:
- mindestens eine Brüheinheit (2), die eingerichtet ist, ein Getränk aus einer Brühsubstanz mit einer Brühflüssigkeit zu brühen;
- einen Brühflüssigkeitsversorgungskreislauf (3) zum Zuführen einer Brühflüssigkeit zu der Brüheinheit (2); und
- eine elektronische Steuereinheit (5) zum Steuern des Betriebs der Getränkezubereitungsmaschine (1);
wobei der Brühflüssigkeitsversorgungskreislauf (3) Folgendes aufweist:
- ein Magnetventil (11) zum Regeln der Durchflussrate der Brühflüssigkeit, um die Durchflussrate der der Brüheinheit (2) zugeführten Brühflüssigkeit zu regeln; und
- einen Brühflüssigkeits-Durchflussmesser (13) zum Messen einer Größe, die eine Menge an Brühflüssigkeit anzeigt, die der Brüheinheit (2) zugeführt wird, und zum Ausgeben eines elektrischen Ausgangssignals, das diese anzeigt,
wobei die elektronische Steuereinheit (5) elektrisch mit dem Brühflüssigkeits-Durchflussmesser (13) verbunden ist, um das elektrische Ausgangssignal davon zu empfangen, und mit dem Magnetventil (11) zum Regeln der Durchflussrate der Brühflüssigkeit, um diesem einen elektrischen Befehl zu liefern;
wobei die elektronische Steuereinheit (5) eingerichtet ist zum:
- Speichern von Brühdaten, die mindestens ein Zielprofil der Brühflüssigkeitsdurchflussrate (FRP) darstellen, das eine zeitliche Entwicklung einer Brühflüssigkeitsdurchflussrate anzeigt, die der Brüheinheit (2) während eines Getränkezubereitungszyklus zugeführt werden soll; und
- Steuern des Magnetventils (11) zum Regeln der Durchflussrate der Brühflüssigkeit in einem geschlossenen Regelkreis auf Grundlage des elektrischen Ausgangssignals des Brühflüssigkeits-Durchflussmessers (13) und des Zielprofils der Brühflüssigkeitsdurchflussrate (FRP), um zu bewirken, dass die aktuelle Brühflüssigkeitsdurchflussrate, die der Brüheinheit (2) zugeführt wird, dem Zielprofil der Brühflüssigkeitsdurchflussrate (FRP) folgt,
**dadurch gekennzeichnet, dass**
das Zielprofil der Brühflüssigkeitsdurchflussrate (FRP) in der elektronischen Steuereinheit (5) als Brühdaten gespeichert wird, das Folgendes anzeigt:
- Anzahl von Präinfusions- und Infusionsschritten von Brühsubstanz in einem Getränkezubereitungszyklus,
- Präinfusions- und Infusionsflussratenprofile (R1, R2) der Brühflüssigkeit während der Präinfusions- und Infusionsschritte der Brühsubstanz, und
- Präinfusions- und Infusionsdauern (D1, D2) der Präinfusions- und Infusionsschritte der Brühsubstanz;
und dadurch dass
das Zielprofil der Brühflüssigkeitsdurchflussrate (FRP) ausgelegt ist, zu bewirken, dass das Magnetventil (11) zum Regeln der Durchflussrate der Brühflüssigkeit gesteuert wird, mindestens einen Brühsubstanz-Präinfusionsschritt mit einer gespeicherten Präinfusionsdauer (D1) auszuführen, und dass währenddessen die aktuelle Durchflussrate der Brühflüssigkeit, die der Brüheinheit (2) zugeführt wird, einem gespeicherten Präinfusions-Durchflussratenprofil (R1) folgt, gefolgt von mindestens einem Brühsubstanz-Infusionsschritt mit einer gespeicherten Infusionsdauer (D2), und währenddessen die aktuelle der Brüheinheit (2) zugeführte Brühflüssigkeitsdurchflussrate einem gespeicherten Infusions-Durchflussratenprofil (R2) folgt, wodurch Umschalten von dem Brühsubstanz-Präinfusionsschritt auf den Brühsubstanz-Infusionsschritt am Ende der gespeicherten Dauer (D1) des vorhergehenden Präinfusionsschritts erfolgt.

2. Die Getränkezubereitungsmaschine (1) nach Anspruch 1, wobei das Zielprofil der Brühflüssigkeitsdurchflussrate (FRP) einen zeitlich variablen Verlauf über die Zeit gemäß einer gestrichelten Linie aufweist, die durch eine Vielzahl von im Wesentlichen geradlinigen Strecken gebildet wird, die Folgendes aufweisen:
- mindestens eine ansteigende Strecke (A), während der die der Brüheinheit (2) zugeführte aktuelle Brühflüssigkeitsdurchflussrate von einer im Wesentlichen Null-Durchflussrate auf eine gespeicherte Präinfusionsdurchflussrate (R1) zunimmt,
- mindestens eine Präinfusionsstrecke (B), während der die der Brüheinheit (2) zugeführte aktuelle Brühflüssigkeitsdurchflussrate für eine gespeicherte Präinfusionsdauer (D1) im Wesentlichen konstant bei der gespeicherten Präinfusionsdurchflussrate (R1) ist,
- mindestens eine weitere Anstiegsstrecke (C), während der die der Brüheinheit (2) zugeführte aktuelle Brühflüssigkeitsdurchflussrate von der gespeicherten Präinfusionsdurchflussrate (R1) auf eine gespeicherte Infusionsdurchflussrate (R2) ansteigt, die höher als die gespeicherte Präinfusionsdurchflussrate (R1) ist,
- mindestens eine Infusionsstrecke (D), während der die der Brüheinheit (2) zugeführte aktuelle Brühflüssigkeitsdurchflussrate für eine gespeicherte Infusionsdauer (D2) im Wesentlichen konstant über die Zeit bei der gespeicherten Infusionsdurchflussrate (R2) ist, und
- mindestens eine abfallende Strecke (E), während der die der Brüheinheit (2) zugeführte aktuelle Brühflüssigkeitsdurchflussrate von der gespeicherten Infusionsdurchflussrate (R2) auf eine Durchflussrate von im Wesentlichen Null abfällt.

3. Die Getränkezubereitungsmaschine (1) nach einem der vorhergehenden Ansprüche, wobei die elektronische Steuereinheit (5) eingerichtet ist, eine Vielzahl von Zielprofilen der Brühflüssigkeitsdurchflussrate (FRP) zu speichern, die mit entsprechenden, von der Getränkezubereitungsmaschine (1) zubereitbaren Getränken assoziiert sind.

4. Die Getränkezubereitungsmaschine (1) nach einem der vorhergehenden Ansprüche, wobei der Brühflüssigkeits-Durchflussmesser (13) stromabwärts des Magnetventils (11) zum Regeln der Durchflussrate der Brühflüssigkeit angeordnet ist.

5. Die Getränkezubereitungsmaschine (1) nach einem der vorhergehenden Ansprüche, wobei der Brühflüssigkeitsversorgungskreislauf (3) ferner einen Brühflüssigkeitserhitzer (14) aufweist, der stromabwärts des Brühflüssigkeits-Durchflussmessers (13) angeordnet ist.

6. Die Getränkezubereitungsmaschine (1) nach einem der vorhergehenden Ansprüche, wobei der Brühflüssigkeitsversorgungskreislauf (3) weiterhin eine Brühflüssigkeitspumpe (9) aufweist, um die Brühflüssigkeit entlang des Brühflüssigkeitsversorgungskreislaufs (3) zuzuführen.

7. Die Getränkezubereitungsmaschine (1) nach einem der vorhergehenden Ansprüche, wobei das Magnetventil (11) zum Regeln der Durchflussrate der Brühflüssigkeit ein motorisiertes Magnetventil mit einem elektrischen Schrittmotor ist, der betreibbar ist, um die Brühflüssigkeitsdurchflussrate, die der Brüheinheit (2) zugeführt wird, diskret regulieren zu können.

8. Die Getränkezubereitungsmaschine (1) nach einem der vorhergehenden Ansprüche, die eine Mehrzahl von Brüheinheiten (2) aufweist,
wobei der Brühflüssigkeitsversorgungskreislauf (3) ferner Folgendes aufweist:
- eine Vielzahl von Brühflüssigkeitszuführungszweigen (10), und zwar einen für jede Brüheinheit (2), um die Brühflüssigkeit zu den Brüheinheiten (2) zuzuführen; und
- eine Brühflüssigkeitspumpe (9), die allen Brühvorrichtungen (2) gemeinsam ist, um die Brühflüssigkeit zu den Brühflüssigkeitszufuhrzweigen (10) zuzuführen.

## Revendications

1. Machine de préparation de boissons (1) comprenant :
- au moins un ensemble de brassage (2) configuré pour brasser une boisson à partir d'une substance de brassage avec un liquide de brassage ;
- un circuit d'alimentation en liquide de brassage (3) pour fournir un liquide de brassage à l'ensemble de brassage (2) ; et
- une unité de commande électronique (5) pour commander le fonctionnement de la machine de préparation de boissons (1) ;
le circuit d'alimentation en liquide de brassage (3) comprend :
- une électrovanne de régulation de débit de liquide de brassage (11) pour réguler le débit du liquide de brassage fourni à l'ensemble de brassage (2) ; et
- un débitmètre de liquide de brassage (13) pour mesurer et délivrer une sortie électrique indiquant une quantité indiquant un volume de liquide de brassage fourni à l'ensemble de brassage (2) ;
l'unité de commande électronique (5) est connectée électriquement au débitmètre de liquide de brassage (13) pour recevoir la sortie électrique de celui-ci, et à l'électrovanne de régulation de débit de liquide de brassage (11) pour lui fournir une instruction électrique ;
l'unité de commande électronique (5) est configurée pour :
- mémoriser des données de brassage représentatives d'au moins un profil de débit de liquide de brassage cible (FRP) indiquant l'évolution dans le temps d'un débit de liquide de brassage qui est destiné à être fourni à l'ensemble de brassage (2) pendant un cycle de préparation de boisson ; et
- commander en boucle fermée l'électrovanne de régulation de débit de liquide de brassage (11) sur la base de la sortie électrique du débitmètre de liquide de brassage (13) et du profil de débit de liquide de brassage cible (FRP) pour amener le débit de liquide de brassage actuel fourni à l'ensemble de brassage (2) à suivre le profil de débit de liquide de brassage cible (FRP) ;
**caractérisée en ce que** le profil de débit de liquide de brassage cible (FRP) est mémorisé dans l'unité de commande électronique (5) en tant que données de brassage indiquant :
- un nombre d'étapes de préinfusion et d'infusion de substance de brassage dans un cycle de préparation de boisson,
- des profils de débits de préinfusion et d'infusion (R1, R2) du liquide de brassage au cours des étapes de préinfusion et d'infusion de substance de brassage, et
- des durées de préinfusion et d'infusion (D1, D2) des étapes de préinfusion et d'infusion de substance de brassage ;
**en ce que** le profil de débit de liquide de brassage cible (FRP) est conçu pour provoquer la commande de l'électrovanne de régulation de débit de liquide de brassage (11) de manière à réaliser au moins une étape de préinfusion de substance de brassage ayant une durée (D1) de préinfusion mémorisée et au cours de laquelle le débit de liquide de brassage actuel fourni à l'ensemble de brassage (2) suit un profil de débit de préinfusion (R1) mémorisé, suivie d'au moins une étape d'infusion de substance de brassage ayant une durée (D2) d'infusion mémorisée et au cours de laquelle le débit de liquide de brassage actuel fourni à l'ensemble de brassage (2) suit un profil de débit d'infusion (R2) mémorisé, ce qui permet à l'étape de préinfusion de substance de brassage de passer à l'étape d'infusion de substance de brassage à la fin de la durée (D1) mémorisée de l'étape de préinfusion précédente.

2. Machine de préparation de boissons (1) selon la revendication 1, dans laquelle le profil de débit de liquide de brassage cible (FRP) a une évolution variable dans le temps selon une ligne brisée formée par une pluralité de tronçons sensiblement rectilignes comprenant :
- au moins un tronçon montant (A) sur lequel le débit de liquide de brassage actuel fourni à l'ensemble de brassage (2) augmente d'un débit pratiquement nul jusqu'à un débit de préinfusion (R1) mémorisé,
- au moins un prétronçon d'infusion (B) sur lequel le débit de liquide de brassage actuel fourni à l'ensemble de brassage (2) est sensiblement constant au débit de préinfusion (R1) mémorisé sur une durée (D1) de préinfusion mémorisée,
- au moins un tronçon de montée (C) supplémentaire sur lequel le débit de liquide de brassage actuel fourni à l'ensemble de brassage (2) augmente r du débit de préinfusion (R1) mémorisé jusqu'à un débit d'infusion (R2) mémorisé supérieur au débit de préinfusion (R1) mémorisé,
- au moins un tronçon d'infusion (D) sur lequel le débit de liquide de brassage actuel fourni à l'ensemble de brassage (2) est sensiblement constant dans le temps au débit d'infusion (R2) mémorisé sur une durée (D2) d'infusion mémorisée, et
- au moins un tronçon descendant (E) sur lequel le débit de liquide de brassage actuel fourni à l'ensemble de brassage (2) diminue du débit d'infusion (R2) mémorisé jusqu'à un débit pratiquement nul.

3. Machine de préparation de boissons (1) selon l'une quelconque des revendications précédentes, dans laquelle l'unité de commande électronique (5) est configurée pour mémoriser une pluralité de profils de débits de liquide de brassage cibles (FRP) associés à des boissons correspondantes pouvant être préparées par la machine de préparation de boissons (1).

4. Machine de préparation de boissons (1) selon l'une quelconque des revendications précédentes, dans laquelle le débitmètre de liquide de brassage (13) est agencé en aval de l'électrovanne de régulation de débit de liquide de brassage (11).

5. Machine de préparation de boissons (1) selon l'une quelconque des revendications précédentes, dans laquelle le circuit d'alimentation en liquide de brassage (3) comprend en outre un élément chauffant de liquide de brassage (14) agencé en aval du débitmètre de liquide de brassage (13).

6. Machine de préparation de boissons (1) selon l'une quelconque des revendications précédentes, dans laquelle le circuit d'alimentation en liquide de brassage (3) comprend en outre une pompe de liquide de brassage (9) pour fournir le liquide de brassage le long du circuit d'alimentation en liquide de brassage (3).

7. Machine de préparation de boissons (1) selon l'une quelconque des revendications précédentes, dans laquelle l'électrovanne de régulation de débit de liquide de brassage (11) est une électrovanne motorisée dotée d'un moteur électrique pas à pas pouvant être actionné pour permettre de réguler discrètement le débit de liquide de brassage fourni à l'ensemble de brassage (2).

8. Machine de préparation de boissons (1) selon l'une quelconque des revendications précédentes, comprenant une pluralité d'ensembles de brassage (2) ;
le circuit d'alimentation en liquide de brassage (3) comprend en outre :
- une pluralité de branches d'alimentation en liquide de brassage (10), une pour chaque ensemble de brassage (2), pour fournir le liquide de brassage aux ensembles de brassage (2) ; et
- une pompe de liquide de brassage (9), commune à tous les ensembles de brassage (2), pour fournir le liquide de brassage aux branches d'alimentation en liquide de brassage (10).
